# EUROPEAN PATENT APPLICATION

(11) **EP 4 852 096 A1**
(43) Date of publication of application: **09.12.2026**
(21) Application number: 25180508.1
(22) Date of filing: 03.06.2025
(51) Int. Cl.: H01M 4/58, H01M 4/136, H01M 4/1397, H01M 10/052, H01M 10/0562, H01M 4/02

(54) **DUCTILE CATHODE ACTIVE MATERIAL FOR ALL-SOLID-STATE CATHODE**

(71) Applicant: Belenos Clean Power Holding AG, 2502 Bienne (CH)
(72) Inventor: BAUMGARTNER, Julian, 8049 Zürich (CH); ISLER, Daniel, 8302 Kloten (CH); KRAVCHYK, Kostiantyn, 8052 Zürich (CH); KOVALENKO, Maksym, 8050 Zürich (CH)
(74) Representative: ICB SA

(57) **Abstract**

The present invention relates to a ductile cathode active material (CAM), wherein the ductile CAM is Li_{1.75}FeCl₄. The invention further relates to an all-solid-state cathode comprising the CAM, a battery cell comprising a Li_{1.75}FeCl₄-comprising all-solid-state cathode, and to methods for producing such an all-solid-state cathode and such an all-solid-state battery cell.

## Description

### Technical field of the invention

The present invention relates to novel cathode active materials for all-solid-state cathodes, in particular for all-solid-state Li-ion battery cells. The present invention further relates to such all-solid-state cathodes and all-solid-state Li-ion battery cells.

### Background

Development of (secondary) Li-ion batteries comprising solid-state electrolytes (SSEs) in conjunction with Li metal anodes stands out as an attractive approach with the potential to not only achieve a high energy density but also superior power density, thereby enabling a rapid charging and discharging. Despite the advantageous properties of SSEs, several critical challenges must still be overcome to make all-solid-state Li-ion batteries (Li-ion SSBs) commercially viable. One of the most urgent challenges lies in the fabrication of all-solid-state cathodes, which today requires complex fabrication processes. Additionally, the state of the art all-solid-state cathodes also present shortcomings in their performance.

All-solid-state cathodes typically comprise or consist of a cathode active material (CAM), an all-solid-state electrolyte (SSE) and an electrically conductive compound, such as graphene, carbon nanotubes and carbon black.

One approach includes the use of known (so-called "hard") cathode active materials, such as oxide-based CAMs like LiₓTMO₂ (TM = transition metal, such as Ni, Co or Mn) - for example LiCoO₂ and LiMnO₂ - and ceramic SSEs, such as Li₇La₃Zr₂O12 (LLZO) and Li₁₊ₓAlₓTi₂₋ₓ(PO₄)₃ (LATP). Processes to produce such all-solid-state cathodes include co-sintering of the SSE and the CAM at high temperatures of ca. 1100°C, or wet-chemical infiltration of the CAM into pre-sintered SSE scaffolds, followed by annealing at temperatures of ca. 700°C. However, such CAMs and SSEs are known to be chemically incompatible, rendering the methods less effective, i.e., the resulting all-solid-state cathodes are found to be of mediocre quality. Further, these methods require high temperatures and are thus energy consuming.

Another approach includes the use of the same known CAMs as the first approach, but combined with ductile SSEs (capable of undergoing plastic deformation prior to fracture when subjected to mechanical stress), such as Li₆PS₅Cl and Li₃YCl₆ (LYC). Contrary to ceramic SSEs, ductile SSEs are known not to require high temperature annealing, however, they require elevated isostatic pressures (typically at least 350 MPa) to achieve an effective contact between the SSE and the state of the art CAMs, in particular oxide-based CAMs. This renders the large-scale implementation challenging. A further limitation is that the ductile SSE and the state of the art CAMs are found to behave differently during charging and discharging of a SSB comprising an all-solid-state cathode comprising them, i.e., they seem to be mechanically incompatible, leading to a gradual decline in the charge-storage capacity of the cathode. To overcome this, it is known to include additional compounds in the cathode, however, such additives seem to compromise the overall energy density of the battery.

High formability and fast lithium diffusivity in metastable spinel chloride for rechargeable all-solid-state lithium-ion batteries, Naoto Tanibata, Masahi Kato, et al., Adv. Energy Substainability Res. 2020, 1, 2000025, discloses Li₂FeCl₄ having a cubic crystal structure as a potential CAM, and is obtained by heating Li₂FeCl₄ having an orthorhombic crystal structure to a temperature of at least 125°C. Compared to orthorhombic Li₂FeCl₄, cubic Li₂FeCl₄ has a much lower activation energy for ionic conduction, an ionic conductivity that is two orders of magnitude higher (at room temperature), and a diffusion coefficient of 2.8 * 10-10 cm² s-1, which guarantees high-rate performance. The chloride ions have a higher polarizability and weaker coulombic interaction with cations than oxide ions, which could offer a higher formability of Li₂FeCl₄ compared with that of oxide-based CAMs. However, the electronic conductivity of Li₂FeCl₄ was found to be limited and far below that of oxide-based CAMs.

US 6,428,935 discloses a lithium secondary battery comprising a positive electrode, a negative electrode and an electrolyte, wherein at least one of the positive and the negative electrode comprises a lithium-containing halide having a spinel structure or a spinel analogous structure. The lithium-containing halide has a high ion bonding property, and is represented by the formula Li_{2-2p-q}Me₁₊ₚX4, wherein Me is at least one transition metal element selected from the group consisting of Ti, V, Cr, Mn, Fe, Co, Ni and Cu, X is at least one halogen element selected from the group consisting of F, Cl, Br and I, and 0 ≤ p ≤ 0.5 and 0 ≤ q ≤ 2-2p, preferably Li₂MeX₄, wherein Me is Fe, Mn or Co. The document is silent on the ionic conductivity as well as the electronic conductivity of the lithium-containing halide.

There is thus a need for improved all-solid-state cathodes, showing a high ionic conductivity and a high electrical conductivity, as well as a stable behaviour under repeated charging/discharging cycles of battery cells comprising the cathode.

### Summary of the invention

It is an aim of the present invention to overcome one or more of the foregoing drawbacks. It is an aim of the present invention to provide a novel cathode active material (CAM) suitable for use in all-solid-state cathodes, having excellent mechanical compatibility with both ceramic ("hard") all-solid-state electrolytes and ductile all-solid-state electrolytes, while exhibiting a high ionic conductivity - even surpassing state-of-the-art CAMs - and a high electronic conductivity at least comparable to state-of-the-art CAMs.

It is an aim to provide such a CAM capable to generate, when used in an all-solid-state cathode comprising an all-solid-state electrolyte (SSE), a high interfacial contact area between the CAM and the SSE, which remains stable upon repeated charging and discharging of an all-solid-state battery (SSB) comprising the all-solid-state cathode.

It is also an aim to provide such a CAM suitable for use in high-power-density all-solid-state cathodes.

A further aim of the present invention is to provide an all-solid-state cathode showing an ionic conductivity and electrical conductivity comparable with and even outperforming state of the art all-solid-state cathodes, in particular such cathodes comprising iron (Fe)-based CAMs, while, when used in a SSB, presenting a more stable performance upon repeated charging/discharging cycles, thereby providing an improved operational lifetime.

Yet a further aim is to provide methods to produce all-solid-state cathodes and SSBs that do no longer require high temperatures of 700°C and higher, and in particular do no longer require sintering and/or annealing to obtain a sufficient CAM-SSE interfacial contact. Consequently, the methods of the present invention allow for a reduced energy consumption, and lower cost related thereto.

The term "ductile" and "ductile material" is used in the present disclosure for materials that are capable of undergoing plastic deformation prior to fracture when subjected to mechanical stress, in particular presenting a strain at fracture of at least 5%, as measured by a tensile test according to ASTM E8 or ISO 6892.

In the light of the present disclosure, the density of a porous material, expressed as % of the theoretical density, can be considered an indication for the ductility of the porous material. In particular, porous materials can be considered ductile if the density is at least 70%, preferably at least 75%, more preferably at least 80%, of its theoretical density on condition that the material can undergo plastic deformation prior to fracture when subjected to mechanical stress, in particular presenting a strain at fracture of at least 5%, as measured by a tensile test according to ASTM E8 or ISO 6892.

The theoretical density of materials can be calculated by methods known in the art, for example based on the crystal structure and the molecular weight of a compound. The actual density as a % of the theoretical density is measured in the present disclosure by using the Archimedes method.

According to a first aspect of the present disclosure, there is provided a ductile cathode active material (CAM) for an all-solid-state cathode as set out in the appended claims.

The ductile cathode active material (CAM) is Li_{1.75}FeCl₄.

Advantageously, the density of the CAM is equal to or higher than 70%, preferably equal to or higher than 75%, more preferably equal to or higher than 80% of its theoretical density, as measured by the Archimedes method.

According to a second aspect of the present disclosure, there is provided an all-solid-state cathode as set out in the appended claims.

The all-solid-state cathode comprises or substantially consists of a ductile CAM according to the first aspect of the present disclosure, and optionally one or both of an all-solid-state electrolyte (SSE) and an electrically conductive compound.

Advantageously, the all-solid-state cathode comprises between 10 and 100% by weight, preferably between 30 and 95% by weight, of the ductile CAM, between 0 and 80% by weight, preferably between 2 and 60% by weight, of the optional SSE, and between 0 and 20% by weight, preferably between 1 and 10% by weight, of the optional electronically conductive compound, based on the weight of the all-solid-state cathode, as determined by Scanning Electron Microscopy with Energy-Dispersive X-ray Spectroscopy (SEM-EDX).

It will be understood that with "0% by weight of the optional SSE or the optional electronically conductive compound" is meant that the all-solid-state cathode does not comprise a SSE or an electronically conductive compound, respectively, whereas with "x % by weight of the optional SSE or the optional electronically conductive compound", x being higher than 0, is meant that the all-solid-state cathode does comprise a SSE or an electronically conductive compound, respectively.

When the all-solid-state cathode comprises a SSE, the SSE advantageously is a ceramic SSE, for example, without being limited thereto, Li₇La₃Zr₂O₁₂ (LLZO) or Li₁₊ₓAlₓTi₂₋ₓ(PO₄)₃.

Alternatively, when the all-solid-state cathode comprises a SSE, the SSE advantageously is a ductile SSE, for example, without being limited thereto, Li₆PS₅Cl or Li₃YCl₆ (LYC).

Advantageously, the all-solid-state cathode comprises a ductile CAM according to the first aspect, a SSE and an electrically conductive compound, preferably wherein the ductile CAM is Li_{1.75}FeCl₄, the SSE is LLZO or LYC, and the electrically conductive compound is carbon black.

According to a third aspect of the present disclosure, there is provided an all-solid-state Li-ion battery cell as set out in the appended claims.

The all-solid-state Li-ion battery cell (Li-ion SSB) comprises an all-solid-state cathode according to the second aspect, i.e., an all-solid-state cathode comprising or substantially consisting of a ductile CAM according to the first aspect of the present disclosure, and optionally one or both of an all-solid-state electrolyte (SSE) and an electrically conductive compound.

Advantageously, the Li-ion SSB is a secondary battery.

According to a fourth aspect of the present disclosure, there is provided a method for producing an all-solid-state cathode comprising a ductile CAM and optionally one or both of a SSE and an electrically conductive compound as set out in the appended claims.

The ductile CAM is according to the first aspect of the present disclosure, and thus as hereinabove described. The optional SSE and the optional electrically conductive compound are as hereinabove described.

The all-solid-state cathode produced by the method of the fourth aspect is advantageously an all-solid-state cathode according to the second aspect of the present disclosure, i.e., the methods of the fourth aspect are in particular suitable for the production of cathodes of the second aspect.

The method for producing such an all-solid-state cathode comprises preparing or providing a cathode mixture comprising or consisting of the ductile CAM and optionally one or both of the SSE and the electrically conductive compound, and pressing the cathode mixture, thereby obtaining the all-solid-state cathode.

When the all-solid-state cathode is to comprise neither a SSE nor an electrically conductive compound, e.g. is to consist of the ductile CAM, the cathode mixture does comprise neither the SSE nor the electrically conductive compound, e.g. consists of the ductile CAM. Said differently, the ductile CAM is in this case provided as the cathode mixture.

Alternatively, when the all-solid-state cathode is to comprise the ductile CAM and one or both of the SSE and the electrically conductive compound, the cathode mixture is prepared by mixing the ductile CAM, the SSE and the electrically conductive compound, whichever is required.

The cathode mixture is pressed at a pressure between 100 and 750 MPa, preferably between 200 and 600 MPa, more preferably between 300 and 500 MPa.

Advantageously, the cathode mixture comprises between 10 and 100% by weight, preferably between 30 and 95% by weight, of the ductile CAM, between 0 and 80% by weight, preferably between 2 and 60% by weight, of the optional SSE, and between 0 and 20% by weight, preferably between 1 and 10% by weight, of the optional electrically conductive compound, based on the dry weight of the cathode mixture.

Advantageously, the method further comprises at least partially, and preferably substantially entirely, dissolving the ductile CAM in a polar solvent prior to preparing or providing the cathode mixture.

With at least partially dissolving is meant that at least 10%, preferably at least 20%, more preferably at least 50%, most preferably at least 75%, such as at least 80%, at least 90% or substantially 100% of the weight of the ductile CAM is dissolved in the polar solvent.

Advantageously, when the ductile CAM is at least partially dissolved in the polar solvent, the method further comprises drying the cathode mixture prior to pressing it, so as to remove the polar solvent from the cathode mixture. Alternatively, when the ductile CAM is at least partially dissolved in the polar solvent, the polar solvent is removed from the cathode mixture upon pressing. Whether a drying step is required or not depends, amongst others, on the nature of the polar solvent, in particular its evaporation (boiling) temperature, the composition of the cathode mixture, and the pressure applied in the pressing step.

According to a further aspect of the present disclosure, there is provided a method for producing an all-solid-state Li-ion battery cell comprising an all-solid-state cathode comprising a ductile CAM and optionally one or both of a first SSE and an electrically conductive compound as set out in the appended claims.

The ductile CAM is according to the first aspect of the present disclosure, and thus as hereinabove described. The optional first SSE and the optional electrically conductive compound are advantageously also as hereinabove described.

Advantageously, the all-solid-state cathode is according to the second aspect of the invention, i.e., comprises a ductile CAM according to the first aspect and optionally one or both of a first SSE and an electrically conductive compound as set out in the appended claims, wherein the first SSE and the electrically conductive compound are as hereinabove described.

The method comprises a step of preparing or providing a cathode mixture, wherein the cathode mixture's composition and preparation is as described hereinabove in the fourth aspect.

The cathode mixture is applied to a first surface of a second SSE. Applying the cathode mixture is advantageously done by methods known in the art.

The cathode mixture and the second SSE are then pressed (together) at a pressure between 100 and 750 MPa, preferably between 200 and 600 MPa, more preferably between 300 and 500 MPa, thereby obtaining an intermediate structure comprising the all-solid-state cathode in contact with the first surface of the second SSE. The pressing step results in a densification of the cathode mixture, as described hereinabove, as well as in an excellent interfacial contact between the obtained all-solid-state cathode and the SSE, which also contributes to a stable performance of the Li-ion SSB produced by the present method.

The method further comprises providing an all-solid-state anode to a second surface of the second SSE of the intermediate structure. The second surface is opposite to the first surface, i.e., opposite to the surface contacting the all-solid-state cathode.

Optionally, the method further comprises the all-solid-state anode and the intermediate structure (together) at a pressure between 20 and 150 MPa, preferably between 30 and 100 MPa, more preferably between 50 and 75 MPa. Whether such a pressing step is performed depends, amongst other, on the nature of the all-solid-state anode. Advantageously, this pressing step enhances the interfacial contact between the SSE and the anode.

Advantageously, and as hereinabove described, the method further comprises at least partially, and preferably substantially entirely, dissolving the ductile CAM in a polar solvent prior to preparing or providing the cathode mixture.

Advantageously, when the ductile CAM is at least partially dissolved in the polar solvent, the method further comprises drying the cathode mixture prior to pressing it together with the second SSE, so as to remove the polar solvent from the cathode mixture. The optional drying step can be performed prior to applying the cathode mixture to the first surface of the second SSE or after applying the cathode mixture and prior to pressing it.

Alternatively, when the ductile CAM is at least partially dissolved in the polar solvent, the polar solvent is removed from the cathode mixture upon pressing it together with the second SSE. Whether a drying step is required or not depends, amongst others, on the nature of the polar solvent, in particular its evaporation (boiling) temperature, the composition of the cathode mixture, and the pressure applied in the pressing step.

### Description of the figures

Aspects of the invention will now be described in more detail with reference to the appended drawings, wherein same reference numerals illustrate same features and wherein:
- Figure 1 shows the crystal structure of two reference CAMs and three inventive CAMs, as analysed by Rietveld refinement;
- Figures 2A-2C shows the schematic representation of the crystal structures of the two reference CAM (Figs. 2A and 2C) and Li1.75FeCl4 as inventive CAM (Fig. 2B) of Figure 1;
- Figures 3A and 3B show the electronic conductivity and an optical image of the Li2FeCl4 pellet (reference CAM) and Li1.75FeCl4 pellet (inventive CAM), respectively;
- Figures 4A and 4B show the ionic conductivity of the Li2FeCl4 pellet (reference CAM) and Li1.75FeCl4 pellet (inventive CAM), respectively;
- Figure 5 shows the ionic conductivity and electronic conductivity for the inventive Li1.75FeCl4 CAM and several reference CAMs;
- Figure 6A and 6B show the XRD-analysis and the ionic conductivity of LYC SSE, respectively;
- Figure 7A shows the potential of a battery cell with a cathode comprising the inventive Li1.75FeCl4 CAM in function of the capacity; and
- Figure 7B shows the capacity and the Coulombic efficiency in function of the number of cycles for the battery cell of Figure 7A.

### Detailed description of the invention

Ductile cathode active materials (CAMs) for an all-solid-state cathode according to the present invention comprise or substantially consist of Li₂₋ₓFeCl₄, wherein 0 < x < 1, preferably between 0.125 and 0.75, more preferably between 0.125 and 0.5, most preferably between 0.25 and 0.5, in particular 0.25. Advantageously, the CAM is Li_{1.75}FeCl₄, i.e. x is advantageously 0.25.

The inventors have surprisingly discovered that Li₂₋ₓFeCl₄, wherein 0 < x < 1, and in particular Li_{1.75}FeCl₄, outperform the known CAM Li₂FeCl₄, independent whether the latter has the cubic crystal phase or the orthorhombic crystal phase, both in ionic conductivity and electronic conductivity, and this with a difference far exceeding what could reasonably be expected.

Advantageously, the inventive CAM has an ionic conductivity (at 30°C) equal to or higher than 0.1 mS.cm⁻¹, preferably equal to or higher than 0.2 mS.cm⁻¹, more preferably equal to or higher than 0.25 mS.cm⁻¹. For example, Li_{1.75}FeCl₄ has an ionic conductivity of approx. 0.5 mS.cm⁻¹, while cubic Li₂FeCl₄ has an ionic conductivity of 1.8 * 10⁻² mS.cm⁻¹ (5.55 times lower). The ionic conductivity of the inventive CAMs, in particular Li_{1.75}FeCl₄, are also outperforming the ionic conductivity of other state of the art CAMs such as LiₓTMO₂, wherein TM is Ni, Co or Mn (for example LiCoO₂ and LiMnO₂): LiCoO₂ has an ionic conductivity of 10⁻⁴ - 10⁻³ mS.cm⁻¹ whereas LiMnO₂ has an ionic conductivity of 10⁻⁵ - 10⁻⁴ mS.cm⁻¹. All ionic conductivity values are values at 30°C.

Advantageously, the inventive CAM has an electronic conductivity (at 30°C) equal to or higher than 1 * 10⁻² mS.cm⁻¹, preferably equal to or higher than 2 * 10⁻² mS.cm⁻¹, more preferably equal to or higher than 5 * 10⁻² mS.cm⁻¹, most preferably equal to or higher than 7.5 * 10⁻² mS.cm⁻¹. For example, Li_{1.75}FeCl₄ has an electronic conductivity of approx. 8 * 10⁻² mS.cm⁻¹, while cubic Li₂FeCl₄ has an electronic conductivity of at most 8.9 * 10⁻⁵ mS.cm⁻¹ (three orders of magnitude lower). The electronic conductivity of the inventive CAMs, in particular Li_{1.75}FeCl₄, are also outperforming the electronic conductivity of other state of the art iron (Fe) comprising CAMs such as LiFePO₄. It was surprisingly found that the inventive CAMs seem to be the only Fe-comprising CAMs that have an electronic conductivity comparable to LiₓTMO₂ CAMs, wherein TM is Ni, Co or Mn (for example LiCoO₂ and LiMnO₂): LiCoO₂ has an electronic conductivity of 1 - 10 mS.cm⁻¹ whereas LiMnO₂ has a much lower electronic conductivity of 10⁻⁴ - 10⁻³ mS.cm⁻¹. All electronic conductivity values are values at 30°C.

Advantageously, the inventive CAMs have a gravimetric capacity which is comparable to that of state-of-the commercial Li-ion battery (LIB) intercalation cathodes, such as LiCoO₂ (140 mAh g⁻¹) or LiMn₂O₄ (148 mAhg⁻¹). Advantageously, the gravimetric capacity is equal to or higher than 50 mAh g⁻¹, preferably equal to or higher than 75 mAh g⁻¹, more preferably equal to or higher than 90 mAh g⁻¹. For example, Li_{1.75}FeCl₄ has a gravimetric capacity of 96 mAh g⁻¹. This follows from the electrochemical delithiation/lithiation of Li_{1.75}FeCl₄, which can be expressed as:

*Li*_{1.75}*FeCl*₄ ↔ *LiFeCl*₄ + 0.75*Li*⁺ + 0.75*e*⁻ .

Advantageously, the inventive CAMs, and in particular Li_{1.75}FeCl₄, are soluble in a polar solvent. With "soluble" is meant in the present disclosure that at least 10 g/L solvent can be dissolved in the polar solvent, at a standard temperature (25°C) and pressure (1 bar).

The term "polar solvent" is used in the present disclosure for solvents that present a dipole moment of at least 1.0 Debye and/or a dielectric constant equal to or higher than 20 at room temperature, wherein the molecules exhibit partial positive and negative charges due to an uneven distribution of electron density. This enables such solvents to interact with and dissolve ionic or polar compounds through dipole-dipole, hydrogen bonding, or ion-dipole interactions.

Advantageously, the polar solvent advantageously has a standard reduction potential lower (more negative) than the standard reduction potential of the Fe³⁺/Fe²⁺ redox couple, +0.77 V vs SHE. Polar solvents having such a standard reduction potential will not oxidize any Fe²⁺ ions present in the solvent upon dissolving the CAM.

The polar solvent can be a polar protic solvent or a polar aprotic solvent. Non-limiting examples of suitable (i.e., having a standard reduction potential lower than +0.77 V vs. SHE) polar protic solvents include methanol, ethanol, n-propanol, isopropanol, butanol, acetic acid, and ammonia. Non-limiting examples of polar aprotic solvents include acetone, acetonitrile, dimethyl sulfoxide (DMSO), dimethylformamide (DMF), N-methyl-2-pyrrolidone (NMP) and tetrahydrofuran (THF). A particularly preferred polar solvent is NMP.

The inventive CAMs are ductile, i.e., they can undergo plastic deformation prior to fracture when subjected to mechanical stress, in particular presenting a strain at fracture of at least 5%, as measured by a tensile test according to ASTM E8 or ISO 6892.

The inventors have found that the ductility of the inventive CAM renders the CAM suitable for use with both ceramic ("hard") all-solid-state electrolytes (SSEs) and ductile SSEs. Said differently, the inventive CAMs can be combined with a wide range of SSEs, thereby proving to be versatile and present a broad compatibility.

The ductile behaviour of the CAM allows for an enhanced interfacial contact, both in terms of quality of the contact and the contact (surface) area, with compounds, independent on the nature (rigidity/ductility) thereof. It is known that an enhanced interfacial contact contributes to an all-solid-state cathode and an all-solid-state battery having a more stable and robust behaviour upon repeated charging/discharging of the battery.

Advantageously, the ductile CAMs of the present invention have a density equal to or higher than 70%, preferably equal to or higher than 75%, more preferably equal to or higher than 80% of the theoretical density, as measured by the Archimedes method. Advantageously, the density as % of the theoretical density comprises firstly uniaxial pressing of the ductile CAM under 380 MPa at room temperature, followed by determining the % of the theoretical density by the Archimedes method.

A density of at least 70%, preferably at least 80% of the theoretical density is an indication of a significant densification of the material, and is comparable to the level of densification that can be achieved for highly ductile halide- and sulphide-based SSEs.

Advantageously, when the density is at least 70%, preferably at least 80% of the theoretical density, a material is considered dense (as opposite to porous) in the field of batteries. Such a degree of densification is necessary in the components of an all-solid-state battery, in particular the cathode and the SSE, to ensure a proper functioning of the battery, because it is known that voids are detrimental in a SSB.

The present invention further relates to all-solid-state cathodes comprising or substantially consisting of a ductile CAM according to the invention, and to methods for producing such an all-solid-state cathode. Advantageously, the all-solid-state cathodes comprise or substantially consists of an inventive CAM and optionally one or both of an all-solid-state electrolyte (SSE) and an electrically conductive compound.

The unique combination of a high ionic conductivity as well as a high electronic conductivity of the inventive ductile CAM, contrary to cathode active materials known in the art, was surprisingly found to render the presence of a SSE and/or of an electrically conductive compound in the all-solid-state cathode optional, depending on the performance requirement of the all-solid-state cathode. Said differently, all-solid-state cathodes according to the invention can consist of (solely) the ductile CAM, or can comprise the ductile CAM and one or both of a SSE and an electrically conductive compound.

The inventors have further surprisingly discovered that the inventive ductile CAMs are compatible with, i.e., can be used with, both ceramic ("hard") all-solid-state electrolytes (SSEs) and ductile SSEs. Said differently, when an inventive all-solid-state cathode comprises an inventive CAM and a SSE, the SSE can be ceramic or ductile. Additionally, the SSE of all-solid-state batteries (SSBs) comprising the inventive all-solid-state cathodes can also be ceramic or ductile.

Non-limitative types of ceramic SSEs, suitable for use in inventive all-solid-state cathodes as well as for use as the SSE in all-solid-state batteries comprising an inventive all-solid-state cathode, include garnet-type, NASICON-type, perovskite-type, sulphide-based, and anti-perovskite-type materials. A non-limitative, yet preferred, example of a garnet-type SSE is Li₇La₃Zr₂O₁₂ (LLZO). Non-limitative examples of NASICON-type SSEs include Li₁₊ₓAlₓTi₂₋ₓ(PO₄)₃, in particular wherein x is 0.3 (LATP) and Li_{1.5}Al_{0.5}Ge_{1.5}(PO₄)₃ (LAGP). A non-limitative, yet preferred, example of a perovskite-type SSE is Li₃ₓLa_{2/3-x}TiO₃ (LLTO). Non-limitative examples of sulphide-based SSEs include Li₁₀GeP₂S₁₂ (LGPS) and Li₇P₃S₁₁. Non-limitative examples of anti-perovskite-type SSEs include Li₃OCl and Li₃OBr.

Non-limitative examples of ductile SSEs, suitable for use in inventive all-solid-state cathodes as well as for use as the SSE in all-solid-state batteries comprising an inventive all-solid-state cathode, include halide-based ductile SSEs and sulphide-based ductile SSEs. Non-limitative examples of halide-based ductile SSEs include Li₃MCl₆, wherein M is a trivalent cation, preferably Y, In, Er, Ho, Sc or La; Li₃M'₁₋₄ₓA₃ₓCl₆, wherein M' is a trivalent cation, preferably Y, In, Er, Ho, Sc, La, and A is a tetravalent cation, preferably Zr, and x is between 0.1 and 0.25, for example Li₃Y_{0.75}Zr_{0.25}Cl₆ (x = 0.0833) and Li₃Y_{0.5}Zr_{0.5}Cl₆ (x = 0.1667); and LiₓTa_{y}La_{z}Cl₃, wherein x + 5y + 3z = 3. Non-limitative examples of sulphide-based ductile SSEs include Li₇P₃S₁₁, Li₁₀GeP₂S₁₂, Li₆PS₅Cl, Li₆PS₅Br, Li₆PS₅I, Li₃PS₄ and Li_{9.5}Al_{0.5}P₂S₁₂.

Advantageously, the electrically conductive compound, when present in the all-solid-state cathode, is a carbon-based compound or a metal-based compound, preferably a carbon-based compound. Non-limiting examples of carbon-based electrically conductive compounds include carbon black (e.g. Super P, Ketjenblack, or acetylene black), graphite (natural or synthetic), graphene, carbon nanotubes and carbon nanofibers. A non-limiting example of a metal-based compound is metal nanoparticles, for example nanoparticles comprising or substantially consisting of silver, copper or nickel.

Advantageously, the all-solid-state cathode comprises between 10% and 100% by weight, preferably between 30% and 95% by weight, more preferably between 35% and 60% by weight of the ductile CAM, based on the weight of the all-solid-state cathode, as determined by Scanning Electron Microscopy with Energy-Dispersive X-ray Spectroscopy (SEM-EDX).

Advantageously, the all-solid-state cathode comprises between 0% and 80% by weight, preferably between 2% and 60% by weight, more preferably between 30% and 60% by weight of the optional SSE, based on the weight of the all-solid-state cathode, as determined by Scanning Electron Microscopy with Energy-Dispersive X-ray Spectroscopy (SEM-EDX). It will be understood that with "0% by weight of the optional SSE" is meant that the all-solid-state cathode does not comprise a SSE, whereas with "x % by weight of the optional SSE", x being higher than 0, is meant that the all-solid-state cathode does comprise a SSE.

Advantageously, the all-solid-state cathode comprises between 0% and 20% by weight, preferably between 1% and 10% by weight, more preferably between 2% and 7% by weight of the optional electronically conductive compound, based on the weight of the all-solid-state cathode, as determined by Scanning Electron Microscopy with Energy-Dispersive X-ray Spectroscopy (SEM-EDX). It will be understood that with "0% by weight of the optional electronically conductive compound" is meant that the all-solid-state cathode does not comprise an electronically conductive compound, whereas with "x % by weight of the optional electronically conductive compound", x being higher than 0, is meant that the all-solid-state cathode does comprise an electronically conductive compound.

Advantageously, the all-solid-state cathode comprises between 10 and 100% by weight, preferably between 30 and 95% by weight, of the ductile CAM, between 0 and 80% by weight, preferably between 2 and 60% by weight, of the optional SSE, and between 0 and 20% by weight, preferably between 1 and 10% by weight, of the optional electronically conductive compound, based on the weight of the all-solid-state cathode, as determined by Scanning Electron Microscopy with Energy-Dispersive X-ray Spectroscopy (SEM-EDX).

The all-solid-state cathode can comprise, in addition to the ductile CAM of the present invention, a further CAM known in the art. Non-limiting examples of such CAMs include LiₓTMO₂ CAMs, wherein TM is Ni, Co or Mn (for example LiCoO₂ and LiMnO₂) and LiFePO₄. Said differently, the all-solid-state cathode can comprise the combination of a commercially available CAM and the inventive ductile CAM. When the all-solid-state cathode comprises the inventive ductile CAM and a further CAM, the cathode comprises between 10% and 100% by weight of cathode active material, based on the total weight of the cathode, wherein the % by weight of cathode active material represents the total amount of cathode active material, i.e., of both the inventive ductile CAM and the further CAM.

The method for producing an all-solid-state cathode according to the invention comprises preparing a cathode mixture and pressing the cathode mixture.

The cathode mixture is prepared by mixing the compounds to be comprised in the all-solid-state cathode. For example, when the cathode is to comprise an inventive ductile CAM, a SSE and an electrically conductive compound - all advantageously as described hereinabove, the method comprises mixing the respective ductile CAM, the respective SSE and the respective electrically conductive compound so as to obtain a cathode mixture. When the cathode is to consist of the inventive ductile CAM, the cathode mixture consists of the inventive ductile CAM, i.e., the CAM represents the cathode mixture.

Advantageously, the cathode mixture comprises between 10% and 100% by weight, preferably between 30% and 95% by weight, more preferably between 35% and 60% by weight of the ductile CAM, based on the dry weight of the cathode mixture.

Advantageously, the cathode mixture comprises between 0% and 80% by weight, preferably between 2% and 60% by weight, more preferably between 30% and 60% by weight of the optional SSE, based on the weight of the cathode mixture, based on the dry weight of the cathode mixture. It will be understood that with "0% by weight of the optional SSE" is meant that the cathode mixture does not comprise a SSE, whereas with "x % by weight of the optional SSE", x being higher than 0, is meant that the cathode mixture does comprise a SSE.

Advantageously, the cathode mixture comprises between 0% and 20% by weight, preferably between 1% and 10% by weight, more preferably between 2% and 7% by weight of the optional electronically conductive compound, based on the weight of the cathode mixture, based on the dry weight of the cathode mixture. It will be understood that with "0% by weight of the optional electronically conductive compound" is meant that the cathode mixture does not comprise an electronically conductive compound, whereas with "x % by weight of the optional electronically conductive compound", x being higher than 0, is meant that the cathode mixture does comprise an electronically conductive compound.

Advantageously, the cathode mixture comprises between 10 and 100% by weight, preferably between 30 and 95% by weight, of the ductile CAM, between 0 and 80% by weight, preferably between 2 and 60% by weight, of the optional SSE, and between 0 and 20% by weight, preferably between 1 and 10% by weight, of the optional electronically conductive compound, based on the dry weight of the cathode mixture.

Advantageously, the pressing step comprises pressing the cathode mixture at a pressure between 100 and 750 MPa, preferably between 200 and 600 MPa, more preferably between 300 and 500 MPa.

The pressing step results in a densification of the cathode mixture, and ensures a good interfacial contact between the components in the cathode mixture. When the cathode mixture consists of the ductile CAM, advantageously provided as particulate material, the pressing step results in a densification of the ductile CAM, thereby reducing the porosity and voids. It is known that a good interfacial contact and low porosity and voids contributes to a more stable performance of the cathode in a battery cell under repeated charging and discharging. Additionally, it was found that the inventive ductile CAMs, when used in all-solid-state cathodes, seem to actively contribute to electrochemical energy storage, thereby improving the cathode power density.

Advantageously, the pressing step is performed at a temperature between 5°C and 80°C, preferably between 10°C and 50°C, more preferably between 20°C and 40°C, for example at room temperature.

Additionally, it was surprisingly found that by using the ductile CAMs of the present invention, the methods for producing the all-solid-state cathode advantageously do not comprise any high temperature steps. Said differently, it was surprisingly found that by using the inventive ductile CAMs, only a pressing step at moderate temperature is required Advantageously, the methods do not require any sintering and/or annealing.

The absence of the need of high temperature treatment steps such as sintering and/or annealing reduce the energy consumption of the cathode-production methods, thereby rendering the methods more sustainable.

It will further be understood that in the absence of any high temperature treatment, the relative amount of each compound in the cathode mixture, expressed by its % by weight, based on the dry weight of the cathode mixture, is substantially equal to the % by weight of the respective compounds in the obtained all-solid-cathode.

Advantageously, the ductile CAM is provided to the cathode mixture as a particulate material. Advantageously, the particles are microparticles, i.e., have a particle size between 1 µm and 1000 µm, as defined by the International Union of Pure and Applied Chemistry (IUPAC).

Alternatively, yet advantageously, the ductile CAM is provided to the cathode mixture as a solution. Advantageously, the solution is provided by at least partially, and preferably substantially entirely, dissolving the ductile CAM in a polar solvent.

The provision of the ductile CAM to a cathode mixture, further comprising one or both of a SSE and an electrically conductive compound, as a solution has the advantage of allowing a very homogeneous distribution of the CAM with regards to the SSE and the electrically conductive compound, whichever is present in the cathode mixture. The inventors have found that this results in all-solid-state cathodes which can have a high mass loading. The provision of the ductile CAM as a solution is in particular advantageous when the SSE is a ceramic SSE.

Advantageously, the optional SSE is provided to the cathode mixture as a particulate material.

Advantageously, the optional electrically conductive compound is provided to the cathode mixture as a particulate material.

Advantageously, the all-solid-state cathodes obtained by the methods described hereinabove are self-standing. A self-standing material refers to a material or structure that is capable of maintaining its shape and mechanical integrity without the need for external mechanical support or a substrate. In the context of the present invention, a self-standing cathode is defined as a cathode that can be handled, transferred, or assembled in an all-solid-state battery without tearing, collapsing, or requiring reinforcement from additional carrier layers.

Advantageously, the all-solid-state cathodes according to the present invention or produced by the methods of the present invention have an operating voltage of approx. 3.7 V vs. Li⁺/Li.

The present invention further relates to all-solid-state batteries and battery cells comprising an all-solid-state cathode as hereinabove described or obtained by the methods hereinabove described. Advantageously, the all-solid-state cathodes comprise or substantially consists of an inventive CAM and optionally one or both of an all-solid-state electrolyte (SSE) and an electrically conductive compound.

Advantageously, the SSB is a Li-ion SSB. Advantageously, the SSB is a secondary battery, in particular a Li-ion secondary battery.

The all-solid-state battery comprises an all-solid-state electrolyte (SSE), an all-solid-state cathode according to the invention at a first surface of the SSE, and an anode at a second surface of the SSE, opposite to the first surface thereof.

The SSE can be any SSE known in the field, i.e., can be a ceramic SSE or a ductile SSE. Advantageously, the SSE is as described hereinabove for the SSE for the all-solid-state cathode.

When the all-solid-state cathode comprises a SSE, the SSE of the SSB can be the same as or different from the cathode-SSE.

The anode can be any anode known in the art for SSBs. Non-limiting examples of suitable anodes for Li-ion SSBs include lithium metal, silicon-based anodes, graphite, tin-based anodes, sodium and potassium-based anodes, titanium-based anodes such as titanium disulfide (TiS₂), and lithium indium (Liln) alloys.

The present invention also related to methods for producing such all-solid-state batteries.

Additionally, it was surprisingly found that by using the ductile CAMs of the present invention, the methods for producing the SSB advantageously do not comprise any high temperature steps. Said differently, it was surprisingly found that by using the inventive ductile CAMs, only a pressing step at moderate temperature is required. Advantageously, the methods do not require any sintering and/or annealing.

The absence of the need of high temperature treatment steps such as sintering and/or annealing reduce the energy consumption of the methods, thereby rendering them more sustainable.

According to a first embodiment for producing an all-solid-state battery, the method comprises preparing a cathode mixture, applying the cathode mixture to a first surface of a SSE, pressing the cathode mixture-SSE, and providing an anode to a second surface of the SSE opposite to the first surface.

Advantageously, the cathode mixture is provided or prepared as hereinabove described for the methods for producing an all-solid-state cathode.

Advantageously, the cathode mixture is applied to the first surface of the SSE by methods known in the art.

Advantageously, the cathode mixture-SSE is pressed at a pressure between 100 and 750 MPa, preferably between 200 and 600 MPa, more preferably between 300 and 500 MPa.

The pressing step results in a densification of the cathode mixture, and ensures a good interfacial contact between the components in the cathode mixture, as well as between the all-solid-state cathode that is formed and the SSB's SSE. It is known that a good interfacial contact contributes to a more stable performance of the SSB under repeated charging and discharging.

Advantageously, the pressing step is performed at a temperature between 5°C and 80°C, preferably between 10°C and 50°C, more preferably between 20°C and 40°C, for example at room temperature.

An anode is then provided at the surface of the SSE opposite to the surface onto which the all-solid-state cathode is present.

Optionally, and depending on the composition and nature of the anode, the method further comprises a second pressing step. The optional second pressing step is performed at a pressure between 20 and 150 MPa, preferably between 30 and 100 MPa, more preferably between 50 and 75 MPa.

Advantageously, the second pressing step is performed at a temperature between 5°C and 80°C, preferably between 10°C and 50°C, more preferably between 20°C and 40°C, for example at room temperature.

According to a second embodiment for producing an all-solid-state battery, the method comprises providing an all-solid-state cathode as described hereinabove or produced by the cathode-producing methods described hereinabove (i.e., a self-standing all-solid-state cathode) at a first surface of a SSE, and an anode at a second surface of the SSE, opposite to the first surface of the SSE. Advantageously, the method comprises pressing the cathode-SSE-anode stack to ensure a good interfacial contact between adjacent components. It is known that a good interfacial contact contributes to a more stable performance of the SSB under repeated charging and discharging.

For example, the method can comprise pressing the cathode and the SSE, thereby obtaining an intermediate structure, followed by providing the anode to the intermediate structure and pressing the intermediate structure-anode, thereby obtaining the SSB.

Advantageously, the pressing step or the pressing steps in the second embodiment are performed at a pressure between 20 MPa and 750 MPa, preferably between 50 MPa and 500 MPa, more preferably between 75 MPa and 400 MPa. It will be understood that the optimal pressure depends on the composition of each one of the cathode, the SSE and the anode.

### Examples

### Example 1 - synthesis of cathode active materia

Under an Ar atmosphere, stoichiometric amounts of LiCl, FeCl₂ and FeCl₃ were mixed to form five mixtures of ca. 1 g each, in the amounts shown in Table 1. The mixtures were preground in an agate mortar for 5 minutes, and were then transferred into a ZrO₂ beaker to which 20 g of ZrO₂ balls having a diameter of 3 mm were added and the beaker was then sealed air-tight. The mechanochemical reaction was carried out in a planetary ball-mill (Fritsch, Pulverisette 7) for 40 cycles, using two steps of 20 cycles each, with a single cycle consisting of 15 minutes milling at 500 rotations per minute (rpm) counterclockwise (uneven cycle numbers) or clockwise (even cycle numbers), followed by five minutes resting, as well as homogenizing the mixture in a glovebox between the steps. This resulted in five CAM powders.

Next, 70 mg of each powder was loaded into a pressing die (diameter 8 mm) and uniaxially compressed at 390 MPa at room temperature for three minutes into CAM pellets. The pellets were then placed in stainless steel coin cells and were heated on a preheated hot place at 100°C for one hour for reference mixture No. 1 and inventive mixtures Nos. 2-4, and heated on a preheated hot plate at 300°C for 5 min for reference mixture No. 5.

**Table 1: dry weight of each compound and targeted CAM composition**

| **Mixture No.** | **Targeted CAM** | **Weight LiCl (mg)** | **Weight FeCl₂ (mg)** | **Weight FeCl₃ (mg)** |
|---|---|---|---|---|
| 1 (Reference) | Li₁FeCl₄ | 209 | 0 | 800 |
| 2 (Inventive) | Li_{1.5}FeCl₄ | 314 | 313 | 400 |
| 3 (Inventive) | Li_{1.75}FeCl₄ | 366 | 469 | 200 |
| 4 (Inventive) | Li_{1.875}FeCl₄ | 392 | 547 | 100 |
| 5 (Reference) | Li₂FeCl₄ | 401 | 600 | 0 |

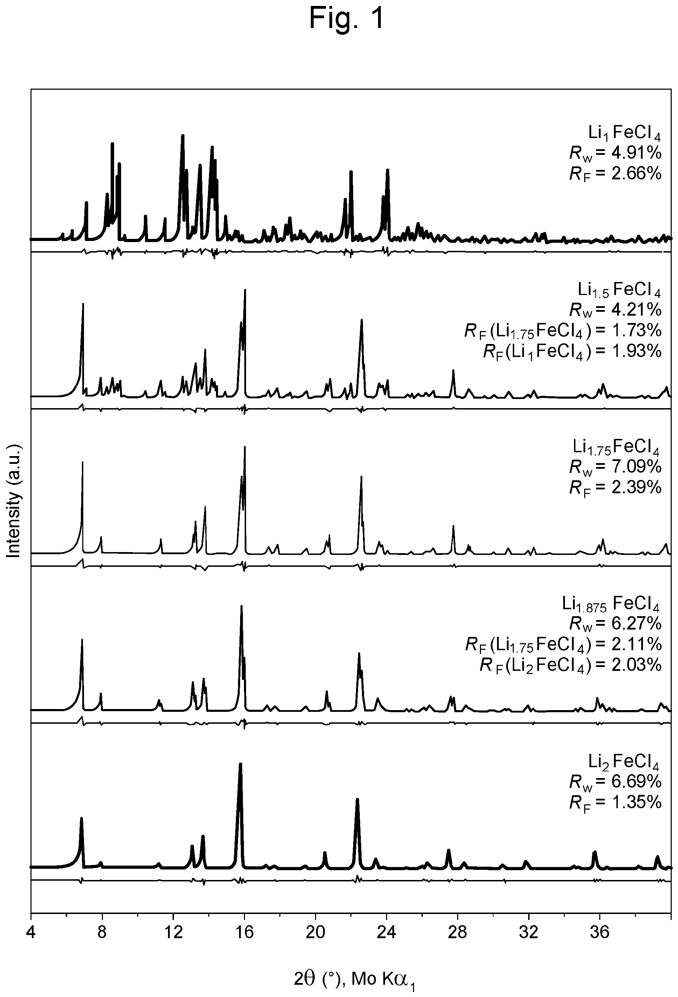

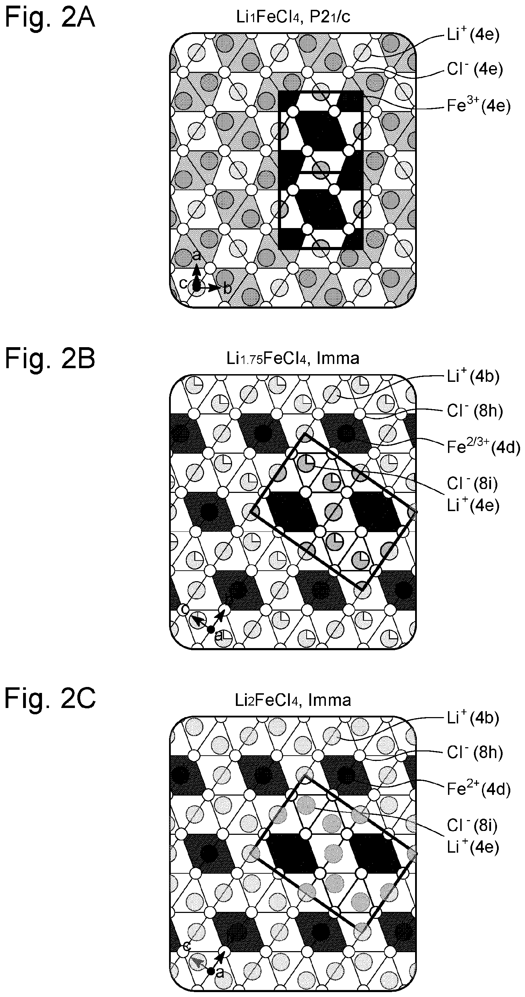

The crystal structure of the five CAMs was analysed by Rietveld refinement (Fig. 1). A schematic representation of the crystal structures of the CAM pellets obtained from mixture Nos. 1, 3 and 5 is shown in Figs. 2A, 2B and 2C, respectively. The crystal structures of the CAM pellets obtained from mixtures Nos. 2 and 4 were comprised of mixtures of the respective phases of Figs. 2A - 2C. Fig. 1 shows that Li₂FeCl₄ and Li_{1.75}FeCl₄ were crystallised in the same cation-ordered spinel phase, albeit with slight distortions, while Li₁FeCl₄ crystallized in a different crystal structure (Fig. 2C). Comparing the CAMs obtained from mixture Nos. 3 and 5 in detail, both share a similar c-axis length (Li₂FeCl₄: 10.32 Å; Li_{1.75}FeCl₄: 10.33 Å), but Li_{1.75}FeCl₄exhibits a slight contraction in the ab-plane (Li₂FeCl₄: 7.31 Å, 7.31 Å; Li_{1.75}FeCl₄ : 7.23 Å, 7.25 Å).

Under an Ar atmosphere, SS (stainless steel)/CAM/SS cells were prepared for the reference Li₂FeCl₄ (obtained from CAM mixture No. 5) and Li_{1.75}FeCl₄ (obtained from CAM mixture No. 3) to analyse the electronic conductivity and the ionic conductivity of both cathode active materials. To this end, the CAM pellet was placed in a solid-state cell holder between two "pistons" made from stainless steel (SS) and having a diameter of 8 mm, and was screwed tight. This resulted in a cell wherein the SS "pistons" serve as the electrode for analysis means.

The electronic conductivity of the pellets was measured by linear sweep voltammetry (LSV) at 30°C, using a multichannel potentiostat/galvanostat (MPG2, Biologic). LSV was performed in a voltage range of 0 - 100 mV at a slow rate (2 µV s⁻¹) to allow a full equilibration. Despite the small applied potentials, the obtained current responses were not linear according to Ohm's law. Therefore, to obtain the Ohmic resistance, the current response was linearly interpolated for different potential ranges, and the obtained conductances as a function of applied potential were themselves interpolated to 0 mV to obtain the sample conductance.

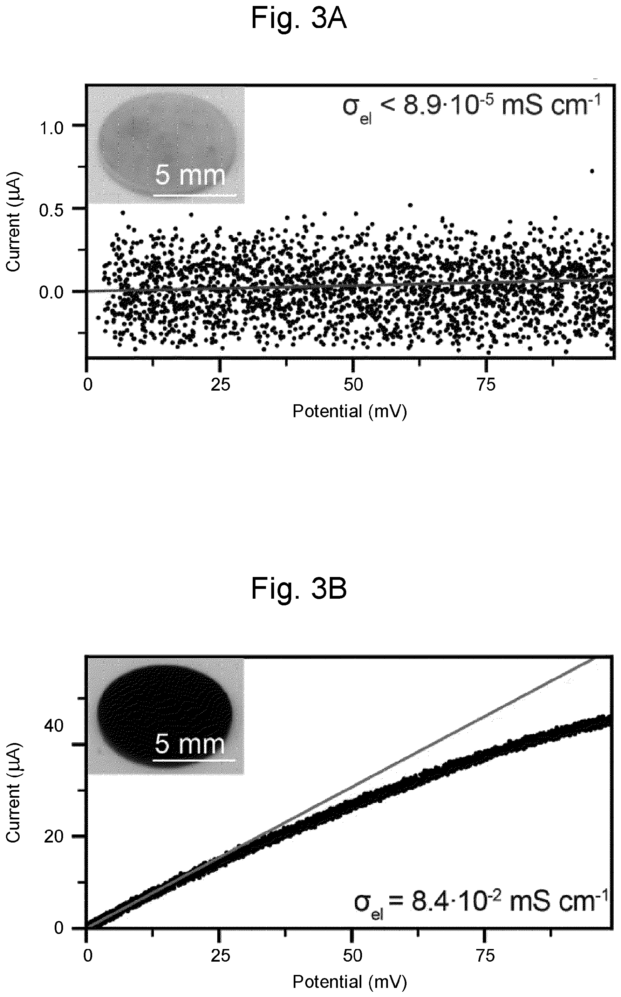

Figs. 3A and 3B show the results as well as an optical image of the pellet for Li₂FeCl₄ and Li_{1.75}FeCl₄, respectively. The reference CAM has an electronic conductivity below 8.9 * 10⁻⁵ mS.cm⁻¹, whereas the inventive CAM has an exceptional electronic conductivity of 8.4 * 10⁻² mS.cm⁻¹, i.e., more than three orders of magnitude higher than the reference CAM, which goes far beyond what could reasonably have been expected. This substantial increase suggests a greater electronic charge carrier concentration in Li_{1.75}FeCl₄, contributing to its superior charge transport properties.

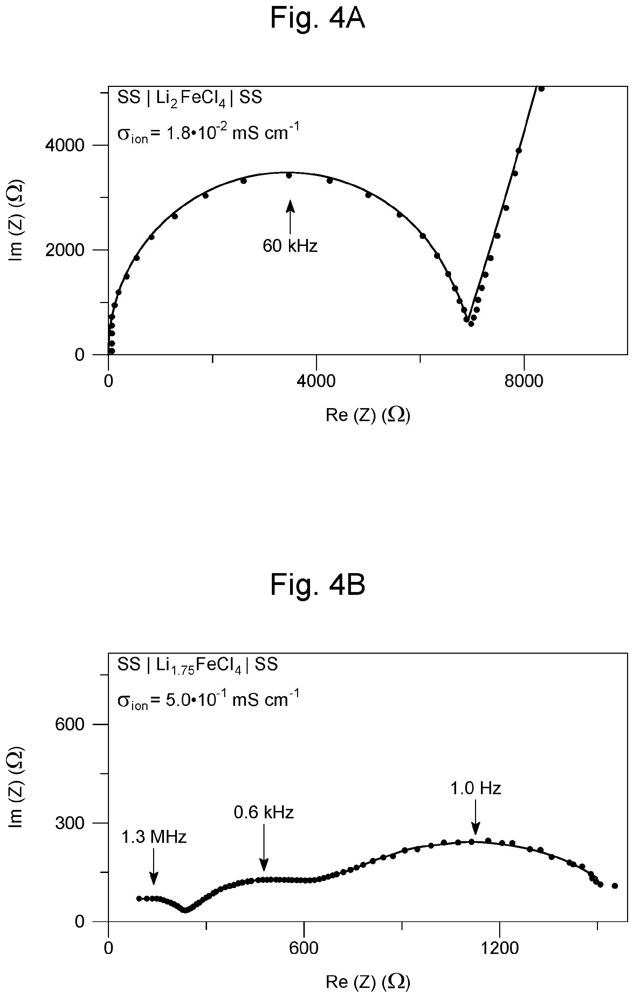

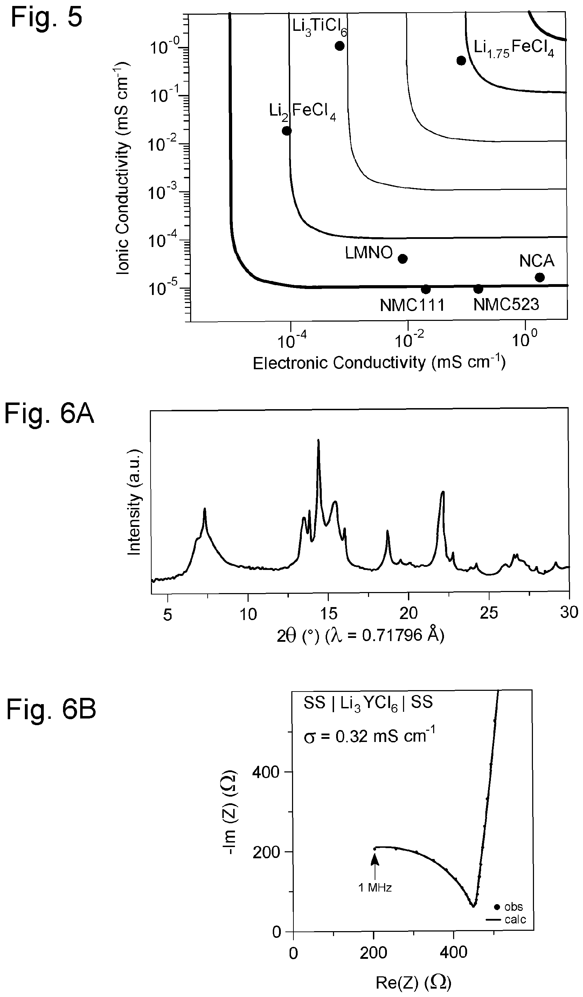

The ionic conductivity of both CAMs was also measured by means of Electrochemical Impedance Spectroscopy (EIS). EIS measurements were conducted at room temperature on an impedance analyser (BioLogic SAS MTZ-35) in a frequency range of 35 MHz to 10 mHz with a sinus peak amplitude of 10 mV. Figs. 4A and 4B show the Nyquist diagram at room temperature for Li₂FeCl₄ and Li_{1.75}FeCl₄, respectively. Whereas the reference CAM (Fig. 4A) has an ionic conductivity of 1.8 * 10⁻² mS.cm⁻¹, the inventive CAM has an exceptional ionic conductivity of 0.5 mS.cm⁻¹, i.e., almost 30 times higher than the reference CAM, which goes far beyond what could reasonably have been expected. The inventors attribute this enhancement to an increase in Li⁺ vacancy concentration in Li_{1.75}FeCl₄ relative to Li₂FeCl₄. Such ionic conductivity values also outperform state of the art CAMs, as is shown in Fig. 5. Data for the state-of-the art CAMs were taken from literature.

The ductility of the CAM Li_{1.75}FeCl₄ (obtained from CAM mixture No. 3) was evaluated by measuring the density and comparing it to the theoretical density, expressing it as % of the theoretical density (level of densification), wherein a higher % represents a higher level of densification of the porous material. It is known that porous materials and porous compounds are considered ductile when their level of densification is at least 70%, preferably at least 80%. The theoretical density was calculated based on the crystal structure and the molecular weight, and the actual density as a % of the theoretical density was measured by means of the Archimedes method. The Li_{1.75}FeCl₄ pellets demonstrated a level of densification of 82%, which is comparable to that of highly ductile halide-based SSEs and sulphide-based SSEs, such as Li₆PS₅Cl or Li₃YCl₆ (LYC).

### Example 2 - preparation of all-solid-state Li-ion battery cells

Under an Ar atmosphere, Li₃YCl₆ (LYC) as all-solid-state electrolyte (SSE) was synthesised as follows: a mixture of 0.66 g comprising LiCl and a 10 wt. % excess of YCl₃ was prepared and ground in an agate mortar for 10 minutes. The ground mixture was then transferred into a ZrO₂ beaker to which 20 g of ZrO₂ balls having a diameter of 3 mm were added and the beaker was then sealed air-tight. The mechanochemical reaction was carried out in a planetary ball-mill (Fritsch, Pulverisette 7) for 240 cycles, using four steps of 60 cycles each, with a single cycle consisting of 15 minutes milling at 600 rotations per minute (rpm) counterclockwise (uneven cycle numbers) or clockwise (even cycle numbers), followed by five minutes resting, as well as homogenizing the mixture in a glovebox after each step. This resulted in a white powder. X-ray diffraction (XRD), shown in Fig. 6A, confirmed that the white powder was LYC. SS/LYC/SS cells were prepared under an Ar atmosphere to analyse the ionic conductivity LYC so as to confirm its use as SSE. The cells were prepared as described hereinabove, and an ionic conductivity of 0.32 mS.cm⁻¹, slightly lower than that of the inventive CAM Li_{1.75}FeCl₄, was measured (Fig. 6B).

Under an Ar atmosphere, 28 mg of Li_{1.75}FeCl₄ powder produced in Example 1 was placed in a ZrO₂ bowl to which 3 g of ZrO₂ balls having a diameter of 3 mm and was homogenized in a frequency ball mill (Fritsch, Pulverisette 23 Mini) for two cycles with a shaking time of one minute per cycle at 30 Hz. Between the cycles, the bowl was rotated by 180°. To the homogenized powder, 38.5 mg of the LYC SSE and 3.5 mg carbon black (Super C65) were added, thereby obtaining a cathode mixture consisting of 40 wt. % Li_{1.75}FeCl₄, 55 wt.% LYC and 5 wt. % carbon black. The cathode mixture was then homogenized in the frequency ball mill for two cycles with a shaking time of 2 minutes per cycle at 15 Hz. Between the cycles, the bowl was rotated by 180°.

To prepare an all-solid-state battery cell, LYC was also used as the SSE. Approx. 30-40 mg LYC powder was loaded into a pressing die having a diameter of 8 mm and was uniaxially compressed at 30 MPa for 10 seconds. This resulted in a SSE pellet having a flat surface. Afterwards, 3.57 mg of the cathode mixture was applied to one surface of the SSE pellet, and the cathode mixture with the SSE pellet were then compressed at 390 MPa for 3 minutes. For the anode, a 8 mm diameter Li disc was sandwiched between two 8 mm In discs, and the In-Li-In sandwich was attached to the opposing surface of the SSE pellet. To allow for Li-In alloy formation, the assembled cell was placed into a solid-state cell holder (Sphere, ASC-A+) and was pressurized at 75 MPa for three minutes, followed by two hours at 50 MPa. After this, the all-solid-state battery cell was removed and placed into a solid-state cell holder (Sphere) and was screwed tight.

The all-solid-state battery cell was subjected to galvanostatic cycling. The galvanostatic cycling was conducted at room temperature on a multichannel potentiostat/galvanostat (MPG2, Biologic) in a voltage range between 1.9 - 3.4 V vs. Liln. The cutoff voltage of 3.4 V vs. Liln was applied to prevent irreversible Cl⁻ oxidation observed at higher potentials. C-rates were calculated with respect to the theoretical capacity for one-electron oxidation of Li_{1.75}FeCl₄ (96 mA h g⁻¹).

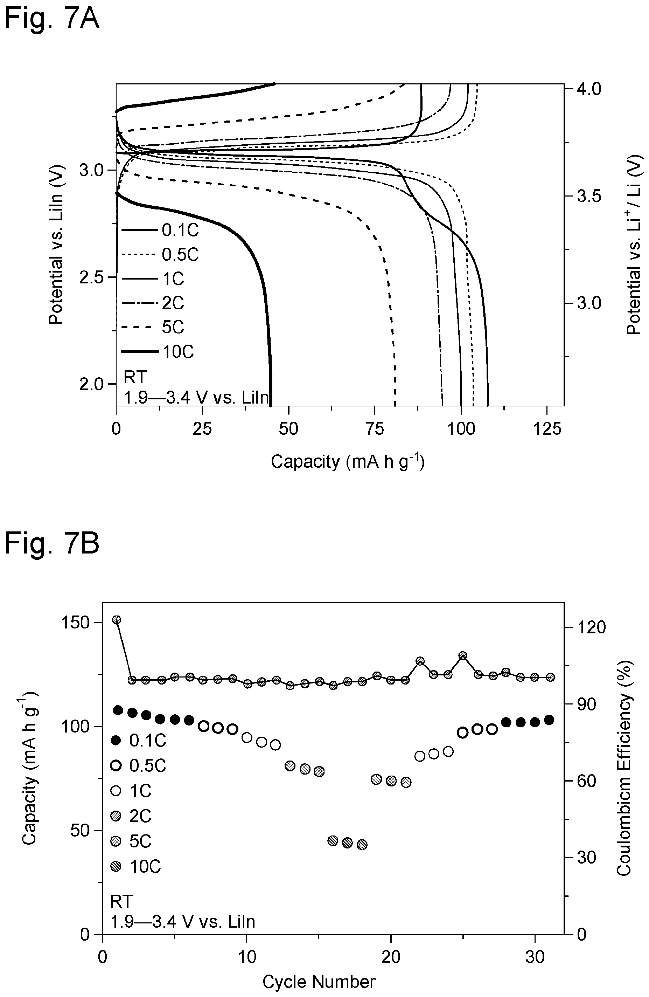

Fig. 7A shows the voltage profile at 0.1C, 0.5C, 1C, 2C, 5C and 10C, expressed as the potential vs. the capacity, from which it is clear that Li_{1.75}FeCl₄ presents a high rate capability.

Fig. 7B shows the cycling stability, expressed as the capacity and the Coulombic efficiency at 0.1C, 0.5C, 1C, 2C, 5C and 10C in function of the number of cycles.

### Example 3 - synthesis of cathode

Li_{1.75}FeCl₄ powder as prepared in Example 1 was entirely dissolved in the polar solvent N-methylpyrrolidon (NMP). A volume of NMP sufficient to allow the complete dissolution of the Li_{1.75}FeCl₄ powder was provided. This resulted in a Li_{1.75}FeCl₄ comprising solution.

A LLZO substrate was provided as SSE for the cathode, and the Li_{1.75}FeCl₄ comprising solution was dropcasted onto the LLZO, followed by drying at a temperature and pressure to allow evaporation of the NMP. Upon drying and thus NMP evaporation, it was noticed that the Li_{1.75}FeCl₄ crystallised out of the solution onto the surface of the LLZO substrate, thereby resulting in a cathode comprising Li_{1.75}FeCl₄ as CAM and LLZO as SSE.

## Claims

1. A ductile cathode active material (CAM) for an all-solid-state cathode, **characterised in that** the CAM is Li_{1.75}FeCl₄.

2. The ductile CAM according to claim 1, having a density equal to or higher than 70%, preferably equal to or higher than 80% of its theoretical density, as measured by the Archimedes method.

3. An all-solid-state cathode comprising a ductile CAM according to any one of the preceding claims and optionally one or both of an all-solid-state electrolyte (SSE) and an electrically conductive compound.

4. The all-solid-state cathode according to claim 3, comprising between 10% and 100% by weight, preferably between 30% and 95% by weight, of the ductile CAM, between 0% and 80% by weight, preferably between 2% and 60% by weight, of the optional SSE, and between 0% and 20% by weight, preferably between 1% and 10% by weight, of the optional electrically conductive compound, based on the weight of the all-solid-state cathode, as determined by Scanning Electron Microscopy with Energy-Dispersive X-ray Spectroscopy (SEM-EDX).

5. The all-solid-state cathode according to claim 3 or claim 4, comprising a SSE, wherein the SSE is a ceramic SSE or a ductile SSE.

6. The all-solid-state cathode according to any one of claims 3 to 5, wherein the all-solid-state cathode comprises a SSE and an electrically conductive compound, and wherein the ductile CAM is Li_{1.75}FeCl₄, the SSE is LLZO or LYC, and the electrically conductive compound is carbon black.

7. An all-solid-state Li-ion battery cell comprising the all-solid-state cathode according to any one of claims 3 to 6.

8. The all-solid-state Li-ion battery cell according to claim 7, wherein the battery is a secondary battery.

9. A method for producing an all-solid-state cathode comprising a ductile CAM and optionally one or both of a SSE and an electrically conductive compound, comprising:
- When the all-solid-state cathode is to comprise one or both of the SSE and the electrically conductive compound, mixing the ductile CAM, the optional SSE and the optional electrically conductive compound, thereby obtaining a cathode mixture; or
- When the all-solid-state cathode is to comprise neither the SSE nor the electrically conductive compound, providing the ductile CAM as the cathode mixture; and
- Pressing the cathode mixture at a pressure between 100 and 750 MPa, preferably between 200 and 600 MPa, more preferably between 300 and 500 MPa, thereby obtaining the all-solid-state cathode,
**characterised in that** the ductile CAM is Li_{1.75}FeCl₄.

10. The method for producing an all-solid-state cathode according to claim 9, wherein the cathode mixture comprises between 10% and 100% by weight, preferably between 30% and 95% by weight, of the ductile CAM, between 0% and 80% by weight, preferably between 2% and 60% by weight, of the optional SSE, and between 0% and 20% by weight, preferably between 1% and 10% by weight, of the optional electrically conductive compound, based on the dry weight of the cathode mixture.

11. The method for producing an all-solid-state cathode according to claim 9 or claim 10, further comprising:
- prior to mixing the ductile CAM with the optional SSE and the optional electrically conductive compound or prior to providing the ductile CAM, at least partially dissolving the ductile CAM in a polar solvent; and
- optionally, prior to pressing the cathode mixture, drying the cathode mixture to remove the polar solvent.

12. A method of producing an all-solid-state Li-ion battery cell comprising an all-solid-state cathode comprising a ductile CAM and optionally one or both of a first SSE and an electrically conductive compound, the method comprising:
- When the all-solid-state cathode comprises one or both of the first SSE and the electrically conductive compound, mixing the ductile CAM, the optional first SSE and the optional electrically conductive compound, thereby obtaining a cathode mixture; or
- When the all-solid-state cathode does comprise neither the first SSE nor the electrically conductive compound, providing the ductile CAM as the cathode mixture; and
- Applying the cathode mixture to a first surface of a second SSE;
- Pressing the cathode mixture and the second SSE at a pressure between 100 and 750 MPa, preferably between 200 and 600 MPa, more preferably between 300 and 500 MPa, thereby obtaining an intermediate structure comprising an all-solid-state cathode in contact with the first surface of the second SSE;
- Providing an all-solid-state anode to a second surface of the second SSE of the intermediate structure, the second surface being opposite to the first surface; and
- Optionally, pressing the all-solid-state anode and the intermediate structure at a pressure between 20 and 150 MPa, preferably between 30 and 100 MPa, more preferably between 50 and 75 MPa, thereby obtaining the all-solid-state Li-ion battery cell,
**characterised in that** the ductile CAM is Li_{1.75}FeCl₄.

13. The method for producing an all-solid-state Li-ion battery cell according to claim 12, wherein the cathode mixture comprises between 10% and 100% by weight, preferably between 30% and 95% by weight, of the ductile CAM, between 0% and 80% by weight, preferably between 2% and 60% by weight, of the optional first SSE, and between 0% and 20% by weight, preferably between 1% and 10% by weight, of the optional electrically conductive compound, based on the dry weight of the cathode mixture.

14. The method for producing an all-solid-state Li-ion battery cell according to claim 12 or claim 13, further comprising:
- prior to mixing the ductile CAM with the optional first SSE and the optional electrically conductive compound or prior to providing the ductile CAM, at least partially dissolving the ductile CAM in a polar solvent; and
- optionally, prior to pressing the cathode mixture and the second SSE, drying the cathode mixture so as to remove the polar solvent.
